Europäisches Patentamt

**European Patent Office**

Office européen des brevets

(19)

(11) Veröffentlichungsnummer: **0 018 511**
**B1**

(12) **EUROPÄISCHE PATENTSCHRIFT**

(45) Veröffentlichungstag der Patentschrift:
02.03.83

(21) Anmeldenummer: 80101869.8

(22) Anmeldetag: 08.04.80

(51) Int. Cl.³: **B 01 D 15/00,** C 02 F 1/28,
**B 01 J 20/28** // B01D17/02,
B01J35/04, B01J35/08

(54) Austausch-Schüttkörper mit reaktivem Material.

(30) Priorität: 07.04.79 DE 2914079

(43) Veröffentlichungstag der Anmeldung:
12.11.80 Patentblatt 80/23

(45) Bekanntmachung des Hinweises auf die Patenterteilung:
02.03.83 Patentblatt 83/9

(84) Benannte Vertragsstaaten:
FR GB IT

(56) Entgegenhaltungen:
DE-A-1 544 061    US-A-3 976 570
DE-A-1 667 329    US-A-3 978 269
DE-A-2 455 676
DE-A-2 630 548
DE-C-366 700
DE-C-392 288
DE-C-1 075 613
DE-U-1 479 471
DE-U-1 695 773
DE-U-7 404 260
FR-A-2 375 138
GB-A-1 035 982
US-A-3 170 969
US-A-3 429 654
US-A-3 506 248

(73) Patentinhaber: **Kernforschungsanlage Jülich
Gesellschaft mit beschränkter Haftung, Postfach 1913,
D-5170 Jülich (DE)**

(72) Erfinder: **Heitkamp, Dieter, Dr., Weissdornweg 6,
D-5170 Jülich (DE)**
Erfinder: **Wagener, Klaus, Prof. Dr., Merkatorstrasse 20,
D-5170 Jülich (DE)**

Austausch-Schüttkörper mit reaktivem Material

Die Erfindung bezieht sich auf Austausch-Schüttkörper für die Spurenstoffanreicherung aus oder Entgiftung von großen Flüssigkeitsmassen, bei dem ein mechanisch stabiler ringförmiger Körper entsprechend reaktives Material derart umschließt, daß es vor einem mechanischen Zugriff benachbarter Austausch-Schüttkörper geschützt ist.

Die Abtrennung bzw. Isolierung von Spurenstoffen aus größeren Flüssigkeitsmassen ist ein Problem, welches bei der Dekontamination, aber speziell auch bei der Rohstoffgewinnung — insbesondere aus dem Meerwasser — auftritt. Für eine solche Isolierung können grundsätzlich Austausch-Phänomene wie Adsorption oder Ionenaustausch herangezogen werden, die zu einer Anreicherung des abzutrennenden Materials an Feststoffoberfläche führen. So wurden bereits Verfahren beschrieben, nach denen größere Wassermassen mit Adsorberkörpern in Form von Platten, Rohren oder auch mit Festbettschüttungen in Berührung gebracht werden.

Nach einem älteren Vorschlag der Anmelderin werden als Trägerkörper oder Adsorberteilchen bezeichnete sinkfähige anreicherungsaktive Austauschschüttkörper mit einer Dichte >1 frei in eine natürliche Strömung entlassen, welche sie aufgrund ihrer unterschiedlichen Dichte selbsttätig durchqueren. Die abgesunkenen und um eine gewisse Strecke in Strömungsrichtung weitergetragenen Teilchen werden dann wieder aufgesammelt und in eine Anlage zur Regenerierung unter Gewinnung des aufgesammelten Spurenstoffs geschickt.

Gemäß einem weiteren Vorschlag der Anmelderin sollen anreicherungsaktive Austausch-Schüttkörper, die leichter als Wasser sind, in Wassermassen, insbesondere eine Meeresströmung, in gewisser Tiefe entlassen werden und die Flüssigkeit aufgrund ihres Auftriebs aufsteigend selbsttätig durchqueren.

Die für die eine oder andere Verfahrensweise eingesetzten Austauschkörper müssen — abgesehen von ihrer speziellen vom Wasser verschiedenen Dichte, die durch entsprechende Materialwahl oder Porosität erreicht werden kann — gewissen Forderungen genügen: Sie müssen zum einen mechanischen Belastungen beim Transport, Ausschütten, Aufsammeln, Filtrieren und chemischen Bearbeiten standhalten und zum anderen möglichst austauschaktiv sein.

Kugelförmige Schüttkörper für die Aufsammlung von Öl von Wasseroberflächen sind aus der US-A-3 976 570 bekannt. Diese Körper haben eine gelochte steife Hülle und sind mit schwammartigem oleophilem Material gefüllt. Zur Entfernung von Ölfilmen sollen solche Körper auf der verschmutzten Wasseroberfläche verteilt und nach einiger Zeit wieder aufgesammelt werden. Über die Aufsammeldauer und Effektivität dieser Schüttkörper zur Beseitigung von Ölverschmutzungen werden keine Angaben gemacht.

Für die Behandlung großer Flüssigkeitsmassen in frei beweglichem Kontakt nach dem oben skizzierten Absink- oder Auftriebsverfahren, bei dem Geschwindigkeiten von einigen cm/s und Behandlungszeiten von einigen Minuten auftreten, erscheinen solche Körper weniger geeignet, da eine ständige Erneuerung der Flüssigkeitsfilme an der Grenzfläche des reaktiven Materials in der Kugel kaum erreicht werden kann; vielmehr wird die Kugel weitgehend von der Flüssigkeit umströmt und nicht unter kontinuierlicher Erneuerung der Flüssigkeit durchströmt werden.

Das gleiche gilt für Schüttkörper, wie sie gemäß der DE-C-1 075 613 als Füllkörper für Kolonnen zur Durchführung organisch chemischer Reaktionen vorgesehen werden: Bei diesen Körpern umschließen raschigringförmige Siebkörper feinkörnigen Katalysator, der so vor Druckbelastungen in der Kolonne wirksam geschützt wird. Ein befriedigender Zugriff zur Katalysatoroberfläche kann in solchen Kolonnen durch entsprechenden Durchsatz und Gestaltung der Kolonne bzw. Kolonnenböden erreicht werden.

Aufgabe der Erfindung ist daher die Schaffung eines Austauschschüttkörpers für die Behandlung großer Flüssigkeitsmassen, dessen reaktive Oberflächen beim frei beweglichen Kontakt des in der Flüssigkeit aufsteigenden oder absinkenden Körpers einem fortlaufenden Flüssigkeitsaustausch mit ständiger Zuführung frischer Flüssigkeit unterliegen.

Diese Aufgabe wird erfindungsgemäß bei einem Austauschschüttkörper der eingangs genannten Art dadurch gelöst, daß das reaktive Material durch oder an Füllflächen in Form konzentrischer Ringe, speichenartiger Stege, Rosetten und/oder einer netzartigen Struktur innerhalb des ringförmigen Körpers gebildet ist.

Diese Körper haben eine stabile Außenkontur (insbesondere mit inerter Oberfläche), welche die Füllflächen vor mechanischem Zugriff durch Nachbarkörper schützt aber nicht völlig umhüllt. Diese bleiben vielmehr frei flüssigkeitszugänglich, so daß ein intensiver Austausch mit den umgebenden Flüssigkeiten (insbesondere Wassermassen) erreicht werden kann. Trotzdem werden auch im Falle einer relativ geringen Festigkeit des reaktiven Materials durch mechanische Beanspruchungen praktisch keine Substanzverluste verursacht, die eine kontinuierliche zyklische Arbeitsweise beeinträchtigen würden.

Solche Austauschkörper sind nicht nur für die Spurenstoffgewinnung aus Wassermassen, sondern immer dann von Interesse, wenn ein intensiver Austausch von Flüssigkeiten insbesondere großen Flüssigkeitsmassen mit Feststoffen herbeigeführt werden soll, wie z. B. auch bei der Entgiftung von großen Flüssigkeitsmengen.

Eine besonders zweckmäßige Ausführungsform der erfindungsgemäßen Austauschkörper wird durch allgemein ringförmige Körper mit inerter Außenfläche gebildet, wie sie weiter unten näher beschrieben sind, die aus einseitig beschichteter steifer Folie gebildet werden können und Füllflächen aus beidseits reaktiv beschichteter Folie aufweisen.

Vorzugsweise ist der Durchmesser solcher Ringe größer als die Höhe der äußeren Zylinderfläche, wodurch gut auffangbare Körper mit gutem Flüssigkeitszugriff entstehen.

Dabei sollte insbesondere durch eine Schwerpunktsverlagerung aus dem Ringzentrum etwa durch einen Stabilisierungsring am Ende der Zylinderfläche (der gleichzeitig mechanisch versteifend und/oder dichtereguliernd wirken kann) für eine selbsttätige Vertikalstellung der Ringachse gesorgt werden. Eine solche Schwerpunktsverlagerung kann z. B. auch durch ein konisches Profil des Außenringes erreicht werden, wie es weiter unten gezeigt wird.

Eine zusätzliche Förderung des Grenzflächenaustauschs kann dadurch erreicht werden, daß man die speichenartigen Stege als propellerartige Leitflächen innerhalb des Außenringes vorsieht, die dem bewegten Austauschkörper einen Drall verleihen.

Die auf oder in den geschützten Oberflächen der Austauschkörper vorg henenaustauschaktiven Zentren können im Material selbst vorhanden sein, wie z. B. bei Ionenaustauschermaterial oder auf ein inertes Trägermaterial aufgebracht werden, was auf chemischem Wege etwa durch chemische Modifizierung oder durch Pfropfen oder dergleichen oder auf physikalisch-chemischem Wege, wie z. B. durch Klebung oder physikalische Aktivierung erreicht werden kann. Besonders einfach lassen sich Ringe mit angeklebter Krempe und Dralleitfläche herstellen.

Man kann auch z. B. zunächst ein insbesondere leichtes aber hinreichend steifes inertes Trägermaterial (z. B. aus Kunststoff) oberflächlich reaktiv beschichten und daraus die genannten Füllflächen formen, die sich innerhalb einer Austauschkörper-Schüttung nur mit den Kanten gegenseitig berühren können. Durch die Formgebung wird sichergestellt, daß keine Teile beschichteter Oberflächen von Ecken oder Kanten eines anderen (gleichartigen) Austausch-Schüttkörpers berührt werden.

Wie bereits angedeutet wurde, soll die Relativbewegung der Austauschkörper durch spezielle Formgebung derart beeinflußt werden, daß das vorbeiströmende Wasser in möglichst innigen Kontakt mit den reaktiven Oberflächen kommt, weshalb die hydrodynamischen Grenzschichten an den Festkörperoberflächen möglichst dünn sein sollen. Deren Stärke hängt von der Relativgeschwindigkeit zwischen Festkörper und umgebender Flüssigkeit sowie von den charakteristischen geometrischen Dimensionen des umströmten Körpers ab. Bei den erfindungsgemäßen Austausch-Schüttkörpern wird das ungehinderte Hindurchströmen des Wassers gewährleistet, und es werden tote Ecken und Winkel vermieden.

In der angefügten Zeichnung sind einige Beispiele für spezielle Austauschkörper wiedergegeben.

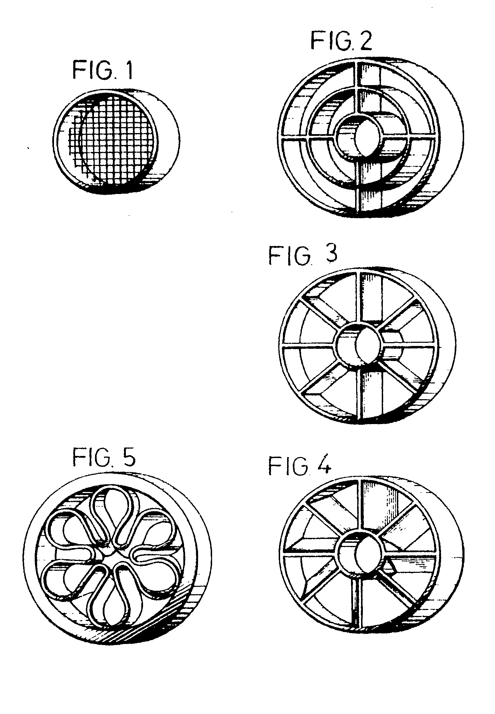

Fig. 1 zeigt ein besonders einfaches Beispiel ein kurzes Zylindermantelstück, dessen nach innen weisende Fläche reaktiv beschichtet ist. Ringe gleichartiger Größe können ihre inneren Oberflächen nicht gegenseitig berühren. Um eine elastische Verformung der Ringe, etwa unter höherem Schüttdruck zu vermeiden, kann der Zylinderring außen mit einer Versteifungsrippe versehen sein. Der Ring kann zusätzlich in seinem Inneren eine netzartige Struktur aus reaktivem Material enthalten, die dort gleichermaßen gegen Berührung geschützt ist. Dieses Netz braucht nicht eben zu sein, sondern kann eine durch Falten, Wickeln, Verbiegen oder dergleichen erzeugte beliebige Gestalt aufweisen.

Gemäß Fig. 2 sind mehrere Ringe konzentrisch angeordnet, von denen die inneren beidseits reaktiv beschicht sein können. Auf diese Weise wird eine größere wirksame Oberfläche erreicht. Solche Ringe haben zudem eine verbesserte mechanische Stabilität und können ohne großes Totvolumen beliebig groß dimensioniert werden, was ihre Abtrennung aus der Flüssigkeit technisch erleichtert und z. B. den Strömungswiderstand von dazu verwendeten Netzen vermindert.

Fig. 3 zeigt zwei konzentrische Ringe, die durch speichenartige Stege miteinander verbunden sind. Solche Körper haben eine noch höhere mechanische Stabilität.

Gemäß Fig. 5 ist eine beidseits beschichtete Füllfläche rosettenartig geformt und innerhalb des Außenringes angeordnet. Auf diese Weise erhält man eine besonders große Oberfläche.

Die vorstehend beschriebenen Ausführungsbeispiele haben den gemeinsamen Vorteil, daß die für die Dicke der hydrodynamischen Grenzschicht maßgebende Lineardimension der Austauschkörper, die Mantelhöhe bei den Ringen bzw. die Fadendicke beim Netz, wesentlich kleiner ist als der gesamte Durchmesser der Austauschkörper, der die Maschenweite und damit den Strömungswiderstand der zu verwendeten Filter- und Rückhaltenetze maßgeblich bestimmt. Dadurch kann auch bei guter Rückhaltefähigkeit und Filtrierbarkeit eine dünne Grenzschicht und damit eine günstige Austauschkinetik erreicht werden.

Am Ende der Zylinderfläche kann vorzugsweise ein insbesondere aus meerwasserresistentem Material bestehender Stabilisierungsring zur Einstellung der Dichte des Gesamtkörpers für seine Verwendung als Sink- oder Auftriebskörper vorgesehen sein. Durch einen Dichteunterschied zwischen diesem Stabilisierungsring und dem Restkörper kann zudem erreicht werden, daß auf den äußeren Ring relativ stärkere Auftriebs- bzw. Schwerekräfte einwirken, die den Gesamtkörper während des Aufsteigens oder Absinkens im Meer in einer stabilen Lage mit der (Pol-)Achse in Bewegungsrichtung halten, so daß eine optimale Durchströmung garantiert wird.

Eine weitere Verbesserung der Austauschkinetik kann schließlich dadurch erzielt werden, daß man dem Austauschkörper durch eine asymmetrische Formgebung oder eine im wesentlichen radiale, aber nicht achsparallele Leitfläche, wie sie in Fig. 4 gezeigt ist, eine automatische Trudelbewegung aufzwingt.

Eine ähnliche Lagestabilisierung wie durch einen zusätzlichen Ring kann durch ein konisches Profil des ringförmigen Austauschkörpers erreicht werden, wie es in Fig. 5 gezeigt wird. Diese auf einer Seite stirnseitig verbreitete Ringfläche kann durch entsprechende Porosität oder Einlagerung von Dichte erhöhendem Material ebenfalls zur Einstellung der gewünschten Sink- oder Auftriebskräfte herangezogen werden.

**Patentansprüche**

1. Austausch-Schüttkörper für die Spurenstoffanreicherung aus oder Entgiftung von großen Flüssigkeitsmassen, bei dem ein mechanisch stabiler ringförmiger Körper entsprechend reaktives Material derart umschließt, daß es vor einem mechanischen Zugriff benachbarter Austausch-Schüttkörper geschützt ist, dadurch gekennzeichnet, daß das reaktive Material durch oder an Füllflächen in Form konzentrischer Ringe, speichenartiger Stege, Rosetten und/ oder einer netzartigen Struktur innerhalb des ringförmigen Körpers gebildet ist.

2. Schüttkörper nach Anspruch 1, dadurch gekennzeichnet, daß die Füllflächen und gegebenenfalls die Innenfläche des Ringes mit reaktivem Material beschichtet sind.

3. Schüttkörper nach Anspruch 1 oder 2, gekennzeichnet durch eine die selbsttätige Vertikalausrichtung der Ringachse bewirkende Schwerpunktsverlagerung aus dem Ringzentrum.

4. Schüttkörper nach Anspruch 3, gekennzeichnet durch ein konisches Profil des Außenringes oder einen Stabilisierungsring am Ende der Ringfläche.

5. Schüttkörper nach einem der vorangehenden Ansprüche, dadurch gekennzeichnet, daß die speichenartigen Stege als drallerzeugende propellerartige Leitflächen ausgebildet sind.

**Claims**

1. Packing exchanger body for the enrichment of trace materials from, or the detoxification of, large quantities of liquid, wherein a mechanically stable annular body surrounds correspondingly reactive material in such a way that the latter is protected from mechanical contact with adjacent packing exchanger bodies, characterised in that the reactive material is formed by or on filling surfaces in the form of concentric rings, spoke-type webs, rosettes and/or a network-type structure within the annular body.

2. Packing body according to claim 1, characterised in that the filling surfaces and, if appropriate, the inner surface of the ring are coated with reactive material.

3. Packing body according to claim 1 or 2, characterised by a displacement of the centre of gravity out of the centre of the ring such that an automatic vertical alignment of the axis of the ring is effected.

4. Packing body according to claim 3, characterised by a conical profile of the outer ring or by a stabilising ring at the end of the ring surface.

5. Packing body according to one of the preceding claims, characterised in that the spoke-type webs are shaped as propeller-like baffle surfaces which cause spinning.

**Revendications**

1. Corps d'échange destiné à être utilisé en vrac, pour obtenir un enrichissement en une substance contenue à l'état de trace dans de grandes masses de liquide ou pour décontaminer de grandes masse de liquide, dans lequel un corps de forme annulaire, stable mécaniquement, enferme de la matière réactive de manière à la protéger de tout accès mécanique d'un corps d'échange voisin, caractérisé en ce que la matière réactive est formée à l'intérieur du corps de forme annulaire par ou sur des surfaces de remplissage en forme d'anneaux concentriques, de barrettes de type en rayon, de rosaces et/ou d'une structure de type réticulé.

2. Corps destiné à être utilisé en vrac suivant la revendication 1, caractérisé en ce que les surfaces de remplissage et, le cas échéant, les surfaces intérieures de l'anneau sont revêtues de matière réactive.

3. Corps destiné à être utilisé en vrac suivant la revendication 1 ou 2, caractérisé par un décalage du centre de gravité en dehors du centre de l'anneau provoquant l'orientation automatique de l'axe de l'anneau suivant la verticale.

4. Corps destiné à être utilisé en vrac suivant la revendication 3, caractérisé par un profil conique de l'anneau extérieur ou par un anneau de stabilisation à l'extrémité de la surface de l'anneau.

5. Corps destiné à être utilisé en vrac suivant l'une des revendications précédentes, caractérisé en ce que les barrettes de type en rayon sont agencées en surfaces de guidage de type en hélice produisant une rotation.

FIG. 1

FIG. 2

FIG. 3

FIG. 5

FIG. 4